(19) Europäisches Patentamt
European Patent Office
Office européen des brevets

(11) **EP 1 067 398 B1**

(12) **EUROPEAN PATENT SPECIFICATION**

(45) Date of publication and mention
of the grant of the patent:
**12.08.2009 Bulletin 2009/33**

(51) Int Cl.:
***G01S 13/89*** *(2006.01)*

(21) Application number: **99964817.3**

(22) Date of filing: **24.12.1999**

(86) International application number:
**PCT/RU1999/000501**

(87) International publication number:
**WO 2000/039606 (06.07.2000 Gazette 2000/27)**

(54) **METHOD FOR GENERATING A RADIOLOCATION IMAGE OF AN OBJECT AND DEVICE FOR GENERATING A RADIOLOCATION IMAGE**

VERFAHREN ZUR ERZEUGUNG DES FUNKSTANDORTBILDES EINES OBJEKTS UND VORRICHTUNG ZUR ERZEUGUNG EINES FUNKSTANDORTBILDES

PROCEDE DE GENERATION D'UNE IMAGE DE RADIOLOCALISATION D'UN OBJET ET DISPOSITIF DE GENERATION D'UNE IMAGE DE RADIOLOCALISATION

(84) Designated Contracting States:
**AT DE FR GB SE**

(30) Priority: **25.12.1998 RU 98123680**

(43) Date of publication of application:
**10.01.2001 Bulletin 2001/02**

(73) Proprietor: **Konochkin, Anatoly Ivanovich
Moscow, 105568 (RU)**

(72) Inventor: **Konochkin, Anatoly Ivanovich
Moscow, 105568 (RU)**

(74) Representative: **Weinzinger, Arnulf et al
Sonn & Partner Patentanwälte
Riemergasse 14
1010 Wien (AT)**

(56) References cited:
**DE-C1- 4 007 611        FR-A1- 2 558 964
FR-A1- 2 566 922        US-A- 5 093 665**

## Description

This invention relates in general to radio location and particularly could be used for development of a portable radar intended for remote exploration of the environment, including the subsurface radio location of the ground.

More in detail, the invention relates to a method for radar imaging of objects as well as a radar imaging device according to the preambles of claims 1 and 2.

From Zarubeshnaya Radioelektronika, 1991, No.1, p.96, a method of subsurface probing is known, in which a short video pulse being formed by a pulse generator is responsible for impact excitation of a broadband transmitting antenna. A signal returned from the target arrives at the receiving antenna, is amplified by a broadband amplifier and converted in a stroboscopic converter. The further signal processing is made in a low frequency range. A disadvantage of this known method is that the formed image is not volumetric, but it is a vertical cross-section of the ground and objects therein. Additionally, the obtained image has a low angular resolution (several tens centimeters) due to the low antenna directivity.

A method of subsurface radar probing is known which is used when measuring the thickness and determining the position of subsurface layers, determining the position of sewerage pipelines and other underground communications, as well as monitoring the state of road beds. In this known solution, a known interrogative method of range (depth) determination is realized, where the delay time of the returned signal relative to the radiated one is measured and calculated on the basis of the following formula:

$$\tau_3 = 2R(\sqrt{\varepsilon'})/C,$$

where:

 $\tau_3$ = delay time to be measured;
 R = calculated range (depth);
 $\varepsilon'$ = complex dielectric permeability of the medium;
 C = electromagnetic wave propagation velocity.

Thereafter, the required range (depth) is calculated, and after digital processing of the returned signal, the user is supplied with data in the form of a graphical dependence of signal parameters on the time, i. e. the range (depth). This image is a vertical cross-section of the object under investigation positioned inside the subsurface layer of the ground.

A further known method comprises the forming of a short video impulse for the purpose of impact exciting a broadband transmitting antenna, which radiates a signal in the direction of the area under investigation. The signal returned from the target is acquired by the receiving antenna, amplified by a broadband amplifier and converted in a stroboscopic converter. The further signal processing takes place at low frequency (Zarubeshnaya Radioelektronika, 1991, No. 1, p. 108). However, this known method does not allow to obtain a volumetric image of the target because the probing is carried out by traveling the antennas along a single coordinate. Simultaneously, the current information is displayed on the indicator screen or TV monitor in the form of a graphic relationship between the parameters of a signal to be received and the time, i.e. depth. In this case the image being formed is a vertical cross-section of the ground. The objects to be investigated are also represented as cross-sections, which are difficult to be identified.

Moreover, this known method is characterized by a low accuracy of measuring the object's occurrence depth due to the absence of accurate data about the value of the ground dielectric permeability, as well as by a low angular resolution due to the low antenna directivity.

There is also known a meteorological CW LFM radar (radiating continuous wave linear frequency modulated signals) designed for subsurface radar probing, which contains a modulator, an RF oscillator and a transmitting antenna sequentially connected, as well as a receiving antenna, an RF amplifier and a mixer sequentially connected, too, the second input of the mixer being connected to the second output of the RF oscillator. The mixer output is connected to a pulse former and spectrum analyzer through a comb rejection filter (SU Certificate of Authorship, No. 1751708). However, this known device has a limited capability because it does not allow to obtain a volumetric image of the desired object, to carry out investigations at a great depth with required accuracy, and finally the obtained images are of a low resolution.

Known methods of resolution increasing by means of antenna focusing (Zarubeshnaya Radioelektronika, 1984, No. 11, p. 15), aperture synthesis through the antenna travel (Osumi N., Ueno K. - In: Proc. Int. Symp. On Noise and Clutter Rej.in Radar and Imag. Sens., Tokyo, 1984), tomography methods with computer processing of received signals (Sakamoto Y.- IEEE Trans, V.GE26, No.4, 1988) allow to achieve a resolution which is equal, in the best case, to the wavelength of the probing signal in the atmosphere. In the ground the resolution gets worse because it is necessary to use the lower frequency band for reducing the energy losses during propagation of electromagnetic waves. In combination with the dielectric permeability of the ground this deteriorates the focusing characteristics of antennas in 2 -3 times. The aperture synthesis to be realized requires high speeds of antenna travel, but it is difficult to provide therefor in urban or field conditions. What concerns the tomograph method, its theory only begins to be developed and the most part of algorithm programs using this method operate unsatisfactorily.

There is known a transportable pulse georadar realizing the above method, which comprises a transmitting antenna and receiving antennas, a clock generator, a calculating microprocessor unit, an amplifier, a stroboscopic converter, an analog-to-digital converter, a display, a control panel, a gate-pulse former and a video generator (Osumi N., Ueno K. In: Proc. Int. Symp. On Noise and Clutter Rej, in Radar and Imag. Sens., Tokyo, 1984).

A disadvantage of this known device consists in that it cannot provide a volumetric image of the object to be investigated because the antenna scans only in the case if it travels in one direction of the area to be explored, and the probing pulse has a very large amplitude (of about 100 V), which does not allow to use market available standard microcircuits in the device construction. Additionally, the use of the low-noise stroboscopic receiver makes the device more expensive and complicated.

From JP 61-260176 A, a two-dimensional synthetic aperture radar is known where a body is moved on predetermined courses to gather data, to obtain a three-dimensional structure of an object to be observed.

Then, EP 0 816 872 A1 discloses a borehole probe with radar antenna means, a signal processor deriving three-dimensional image data for a volume of the dielectric material surrounding the bore.

In DE 40 07 611 C1, a view forward radar is disclosed where, in a conventional manner, two-dimensional images of land and sea surfaces are obtained.

From FR 2 558 964 A, a radar simulator is known which is designed to form a false target in the form of an imaginary 3-D-object in the space.

US 5,093,665 A describes a point target filter for a weather radar system, for eliminating point targets, such as airplanes, in real time.

Finally, FR 2 566 922 A refers to a device for visualization of images on the basis of digital data and its use for navigation purposes.

It is an object of the invention to provide a method of radar imaging of objects which allows to obtain a volumetric image of an object under investigation, to determine the distance to this object with high accuracy (of about units of centimeter), including the case when this object lies in the ground, and to essentially improve the sensibility due to increasing the signal/noise ratio by means of in-phase summation of probing signals power from each transmitting antenna.

An additional object of the invention is to provide a radar imaging device which allows to carry out the object investigation with high resolution. Besides, the radar imaging device should be a high-technology device which can be built with the use of standard microcircuits and is not very expensive.

To solve these objects, the invention provides a method and a device as defined in claims 1 and 2. Preferred embodiments of the device are defined in claims 3 and 4.

The essence of the invention consists in that in the known method for radar imaging of objects with the help of a portable radar intended to remotely investigate the environment, while the transmitting antenna radiates a probing signal towards the object being deposited within a specified three-dimensional volume to be explored, the signal returned from the object is received and the object's image is formed, N(N>1) transmitting antennas successively radiate probing signals in the direction towards the chosen volume to be explored, which is presented as if it consists of K (K>2) point elements, the time delays of signal propagation $\tau_{3\,TX}$ from each of the N transmitting antennas and $\tau_{3\,Rx}$ from the receiving antenna to each of the K (K>2) point elements are previously calculated, the sequence of probing signals radiation by each of the N transmitting antennas to each of the K point elements of the volume is determined on the basis of a priori calculated time delays of signal propagation $\tau_{3\,TX}$ and $\tau_{3\,RX}$; at least one transmitting antenna having the greatest time delay of signal propagation to the K-th point element of the volume $\tau_{3\,maxTX}$ will be the first to radiate the probing signal, and the moment when each subsequent transmitting antenna shall be switched on depends on the absolute value of the difference in time delay, $\Delta\tau_3$ between the $\tau_{3\,maxTX}$ and the time delays of signal propagation, $\tau_{3\,TX}$, of the remaining transmitting antennas to the same element of the volume; that transmitting antenna for which the $\Delta\tau_3$ value for the same point element of the volume is the smallest, will be the last to radiate the probing signal.

An in-phase power summation of probing signals at the surface of each of the K point elements of the volume is accomplished at the instant when the time delay $\tau_{3\,maxTX}$ of an appropriate transmitting antenna is maximum. Provided that certain structural heterogeneity is available in the K-th point element of the volume, the receiving antenna acquires a signal returned from that heterogeneity in the moments, which correspond to the summed up time delay $\tau_{3\,maxTX}$ of signal propagation for the transmitting antenna and $\tau_{3\,RX}$ for the receiving antenna; the information signals are extracted from the returned signals, and provided that the power level of information signals exceeds a specified signal threshold, the extracted information signals are digitized and stored as digital signals, which are made to correspond to a "tone color" of an appropriate element of the volume to be explored, the image of said volume is formed in conformity with the (grey) tone color of its elements.

As to the device, a plurality of transmitting antennas and corresponding video generators with variable delays, for determining the moment of turning-on the antenna and for regulating the length of pulse signals radiated by the transmitting antennas are provided; the output of each of the video generators is connected to an input of each of the transmitting antennas; the radar imaging device further comprises a receiving antenna and an amplifier connected thereto, an A/D converter (ADC), a calculating microprocessor and a display connected thereto, as well as a clock generator and a control panel for the calculating microprocessor; the output of the control panel is connected to the control input of the calculating microprocessor; a clock input of the microprocessor is connected to the clock generator. Additionally, a D/A converter (DAC), a sample-store unit, and a tunable gate-pulse unit are provided; a first output of the gate-pulse unit is connected to the control input of the D/A converter, and a second output is connected to the control input of the sample-store unit and to the control input of the A/D converter; the input of A/D converter is connected to the output of the sample-store unit.

The input of the sample-store unit is connected to the output of the amplifier, the control input of this amplifier is connected to the output of the D/A converter, the digital inputs of which are combined with the digital inputs of the tunable gate-pulse unit, with digital inputs of each of the N video generators and - through a digital bus - they are connected to digital outputs of the calculating microprocessor. The «start-up» output of the calculating microprocessor is connected to the «start-up» input of the tunable gate-pulse unit and to the «start-up» input of each of the video generators; the clock inputs of the video generators are combined and connected to the clock output of the clock generator and to the clock input of the tunable gate-pulse unit, the «resent» input thereof being combined with the «reset» input of each of the video generators and connected to the «reset» output of the calculating microprocessor.

Furthermore, the tunable gate-pulse unit and the video generators with variable delays, for determining the moment of turning-on transmitting the antennas and for fixing the length of pulse signals radiated by the transmitting antennas, may be implemented by using original functional block diagrams.

Aspects, objects and advantages of the present invention may be gathered from the following description of preferred embodiments and the accompanying drawings wherein:

> Fig. 1 shows a block diagram of a radar imaging device,

> Fig.2 shows a circuit diagram of a video generator with variable delay, as a part of this radar imaging device; and

> Fig.3 shows a block diagram of a tunable gate-pulse unit forming another part of this radar imaging device.

The proposed method of object's radar imaging is based on the inverse conversion of angular coordinates calculated on the method of ranging differences, because just the a priori known angular coordinates (time delays) of elements in the three-dimensional volume relative to antenna allow to calculate the differences of time delays which are necessary to be specified between the moments when the transmitting antennas radiate the probing signals, with the aim to provide the in-phase summation of power of these probing signals directly on the surface of each given element within the three-dimensional volume. The resulting benefit from power summation allows to increase the signal to noise ratio by a factor N (where N>1 - the number of transmitting antennas), what can be used for selecting the returned signals. The received digital signals shall be converted into a digital equivalent, which shall correspond to the tone color (of the grey) of that element of the volume from which this signal was returned.

The consecutive order of displaying the volume elements and coloring them into corresponding tone colors allow to obtain a volumetric image of the desired volume together with objects therein. In order to achieve this, the size and shape of the three-dimensional volume to be investigated shall be chosen, where the device will scan and the resulting radar image will appear on the display. Further, this volume will be represented as if it consists of similar parts - volume elements, which will be actually responsible for the image resolution. The smaller the chosen volume element, the higher is the image resolution, and the longer proceeds the radar imaging.

It is known from the radio location that the signals returned from a point target and received by two separated receiving antennas make it feasible to calculate the angular coordinates of this target. If we adopt each volume element as a point target, then it would be possible to calculate the coordinates of these elements with the help of radar antennas (considering that all antennas are receiving ones). All one has to do is to measure the distance (R) from each volume element to each antenna and to calculate the appropriate delays ($\tau_3$), using the formula:

$$\tau_3 = R/C/\sqrt{\varepsilon'},$$

where

> $\varepsilon'$ = complex dielectric permeability of the medium;
> C = propagation velocity of electromagnetic wave in the atmosphere.

By the inverse conversion of ranging-difference angular coordinates it is meant that after choosing the angular coordinates of volume elements (point targets) with the help of N (N>1) transmitting antennas and with usage of a certain algorithm, which takes in account these coordinates, the probing signals are alternately radiated, their powers are in-phase added on the surface of the chosen element of the volume (point target). The signal formed therewith will contain the information about the value of returned signal and about the coordinates of the point target. This information may be expressed by the time delay of the arrival of a returned signal at the input of the receiving antenna.

This means that once one has calculated the coordinates of elements within the given volume and one can scan them, when reading from the memory the corresponding coordinates being expressible through the values of time delays.

The synthesizing of probing signal for N transmitting antennas could be realized on the following algorithm. The maximum signal delay $\tau_{max}$ is determined among the found delays for each volume element. The antenna (or antennas) having $\tau_{max}$ is the first to radiate. For the remaining transmitting antennas the differences of time delays $\Delta\tau_3$ between $\tau_{max}$ and antenna's time delay $\tau_3$ are calculated. The obtained values $\Delta\tau_3$ serve to determine the sequence and the moment of turning-on for each transmitting antenna on the principle: the greater $\Delta\tau_3$, the later the antenna must be actuated.

If all transmitting antennas radiate the probing signals in conformity with proposed algorithm, the powers of these signals would be in-phase added on the surface of the volume elements, the angular coordinates of which have been considered in the form of time delays by synthesizing the probing signals.

While changing the delay time successively, it would be liable to scan all pixels of the image to be displayed. For the aim to exclude the false returned signals the sample-store unit shall be gated. The moment when the strobe appears is determined by the sum of delay times - $\tau_{str} = \tau_{max\,TX} +_+ \tau_{RX}$, where:

$\tau_{max\,TX}$ - maximum delay time of transmitting antenna;

$\tau_{RX}$ - delay time of receiving antenna.

The obtained values of returned signals from each element of the volume shall be digitized and stored in the form of three-dimensional array, which conforms to the arrangement of elements in the three-dimensional volume. Therewith the (grey) tone color of an appropriate point on the formed object's image shall be found for each digital equivalent. The distribution density of point targets determines the resolution of ensuing volumetric image.

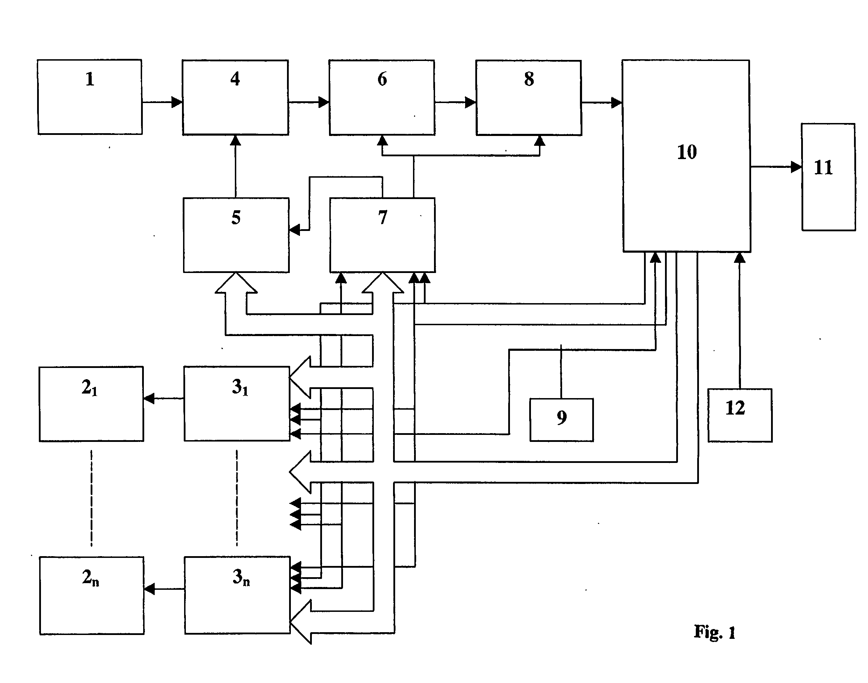

The device for object's radar imaging (Fig.1) comprises a receiving antenna 1, N transmitting antennas 2, N video generators 3 with variable delay, an amplifier 4, a D/A converter 5, a sample-store unit 6, a tunable gate-pulse unit 7, an A/D converter 8, a clock-pulse generator 9, a calculating microprocessor 10, a display 11, and a control panel 12 for the calculating microprocessor 10.

The receiving antenna 1 is - through the successively connected amplifier 4, the sample-store unit 6 and the A/D converter 8 - connected to the signal input of the calculating microprocessor 10, the control input of which is connected to the output of the microprocessor's control panel 12, and the clock input of which is connected to the output of the clock-pulse generator 9; the output of the calculating microprocessor 10 is connected to the display 11.

The output of each of the N video generators 3 with variable delay is connected to the input of a respective one of the N transmitting antennas 2, respectively. A first output of the tunable gate-pulse unit 7 is connected to a control input of the D/A converter 5, and a second output is connected to a control input of the sample-store unit 6 and to a control input of the A/D converter 8.

The control input of the amplifier 4 is connected to the output of D/A converter 5, the digital inputs of which are combined with digital inputs of the tunable gate-pulse unit 7, with digital inputs of each of the N video generators 3 and through a digital bus with digital outputs of the calculating microprocessor 10. The «start-up» output of the calculating microprocessor 10 is connected to a «start-up» input of the tunable gate-pulse unit 7, and a «start-up» input of each of the N video generators 3, the clock inputs of which are combined and connected respectively to the clock output of the clock-pulse generator 9 and to the clock input of the tunable gate-pulse unit 7, the «reset» input of which is combined with the «reset» input of each of the N video generators 3 and connected to the «reset» output of the calculating microprocessor 10.

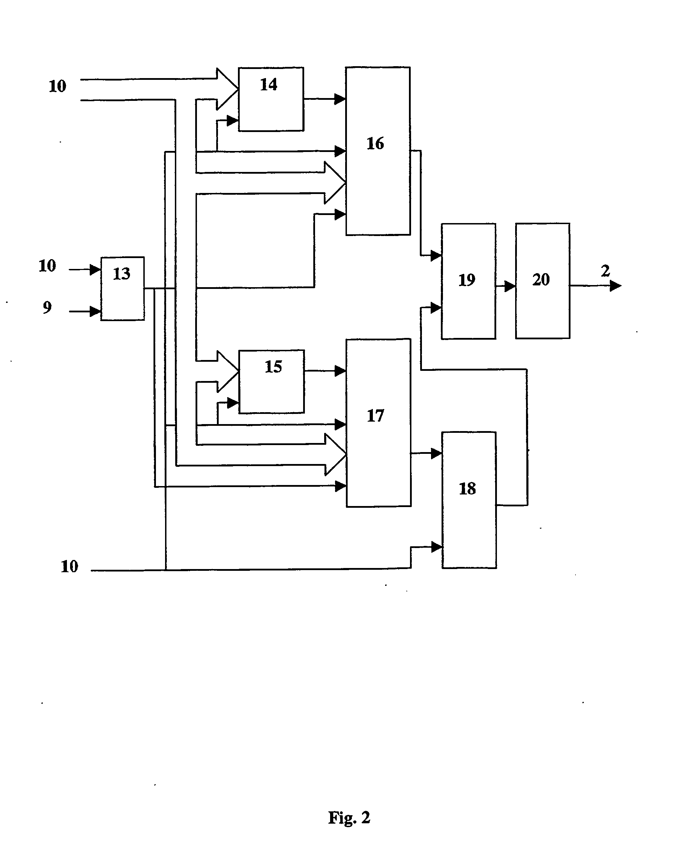

The video generator 3 with variable delay (Fig. 2) comprises a mono-pulse generator 13, a first and a second D/A converter 14 and 15 (DAC-1 and DAC-2), a first and a second tunable delay line 16 and 17 (TDL-1 and TDL2), an OR gate 18, a RS-trigger 19 and a power amplifier 20.

The inputs of DAC-1 14, DAC-2 15, TDL-1 16 and TDL-2 17 in the video generator 3 with variable, delay are combined and represent the digital inputs of the device, the other inputs of which are the «start-up» input and clock input of the mono-pulse generator 13, the output of which is simultaneously connected to logic inputs of TDL-1 16 and TDL-2 17, the analog inputs of each of them being connected to outputs of DAC-1 14 and DAC-2 15 correspondingly. One of the device inputs is also the «reset» input being connected to «reset» inputs of DAC-1 14, DAC-2 15, TDL-1 16 and TDL-2 17, OR gate, therewith the output of the TDL-1 16 being connected to the S-input of the RS-trigger 19, the R-input of which is connected to the output of the OR gate 18, the other input of which is connected to the output of TDL-2 17, the output of the RS-trigger 19 being connected to the input of power amplifier 20, the output of which is an output of the device.

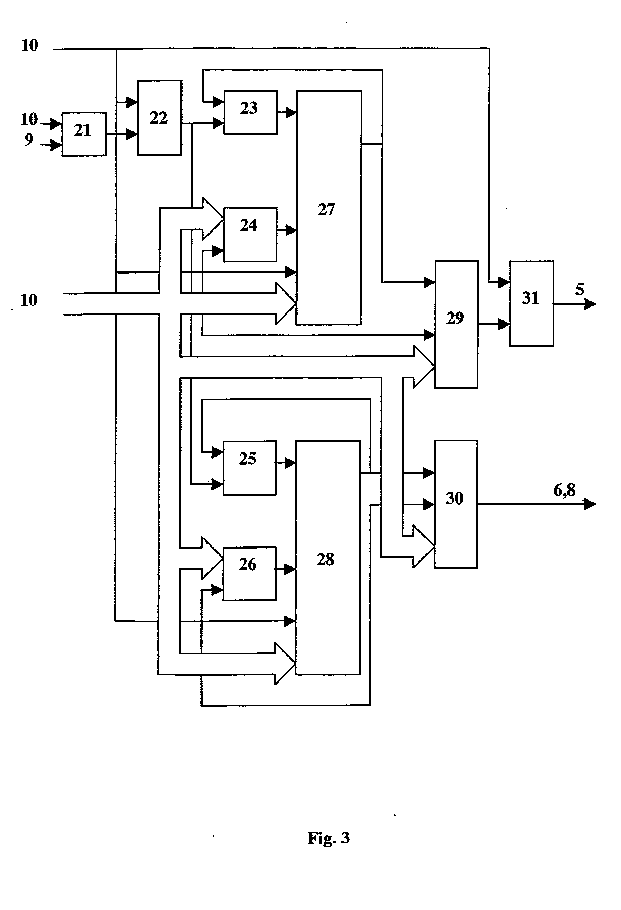

The tunable gate-pulse unit 7 (Fig.3) comprises a mono-pulse generator 21, an RS-trigger 22, a first and a second AND gate 23 and 25, a first and a second D/A converter 24 and 26 (DAC-1 and DAC-2), a first and a second tunable delay line 27 and 28 (TDL-1 and TDL-2), a first and a second counter 29 and 30, an OR gate 31, wherein the digital inputs of DAC-1 24, DAC-2 26, TDL-1 27 and TDL-2 28 and the digital inputs of the first and the second counters 29 and 30 are combined by a digital bus and represent a digital input of the device, the R-input of the RS-trigger 22, the «reset» inputs of DAC-1 24, DAC-2 26, TDL-1 27 and TDL-2 28, of the first and the second counters 29 and 30, of the OR gate 31 being combined and representing a «reset» input of the device;

the other inputs of the device are the «start-up» input and the clock input of the mono-pulse generator 21, the output of which is connected to the S-input of the RS-trigger 22, the output of which is connected correspondingly to inputs of the first and the second AND gates 23 and 25, the other inputs of each AND gate being connected to combined output of TDL-1 27 and the third input of the first counter 29 and to the combined output of TDL-2 28 and to the third input of the second counter 30. The outputs of the first and the second AND gates 23 and 25 are connected to inputs of TDL-1 27 and TDL-2 28, the other inputs of each delay line are connected to outputs of DAC-1 24 and DAC-2 26, therewith the output of the first counter 29 is connected to the other input of the OR gate 31, the output of which is the first output of the device, the second output of which is the output of the second counter 30.

The operation of the radar imaging device consists in the following.

The device radiates a number of probing signals with a time shift relative to that probing signal which is the first to be radiated. The time shifts are determined by means of coordinates of the element which has been chosen to be probed.

Within each cycle, when the probing signals are generated, ten codes shall be read from calculating microprocessor's 10 memory, the codes shall be linked with suited coordinates of a successive volume element to be probed and written into corresponding video generators 3 with variable delay. The codes are also written into the tunable gate-pulse unit 7 for generation of gate-pulses. The pulses, on the basis of which the codes of input signals are allowed to be written, are double fed for a cycle from the output of the tunable gate-pulse unit 7 to the control input of D/A converter 5. Initially, a «resent» pulse is fed from calculating microprocessor 10, which enables to generate a voltage at the output of the D/A converter 5, which provides the amplifier 4 locking, which remains to be locked till the moment when a gate-pulse appears at the first output of the tunable gatepulse unit 7, which writes a new code into the D/A converter 5, which forms a voltage at its output, which unlocks the amplifier 4 and establishes its gain depending on the distance to the volume element to be probed. The more remote from antennas 1 and 2 the volume element is located, the higher is the gain of the amplifier 4.

The probing signal generation is provided upon the «reset» signal arriving directly from computing microprocessor 10; at this time the RS-trigger 19 is set to the zero state through the OR gate 18. Simultaneously, and on the basis of the same signal, the codes shall be written from the information link which is connected to calculating microprocessor 10 and switched on to inputs of DAC-1 14, DAC-2 15, TDL-1 16 and TDL-2 17. Into the DAC-1 14 and TDL-1 16 the code is recorded, which is equal to the value of delay difference, and into the DAC-1 15 and TDL-2 17 - the code which conforms to the length of probing signal being formed.

When a «start-up» pulse from the calculating microprocessor 10 arrives at the first input of the mono-pulse generator 13, a mono-pulse begins to be formed at the generator's 13 output, the rising edge of the mono-pulse will be fixed to the clock grid of the clock-pulse generator 9, which is to be fed to the second input of the generator 13. The mono-pulse from the output of generator 13 arrives at logic inputs of TDL-1 16 and TDL-2 17. Depending on the value of codes written into DAC-1 14 and TDL-1 16, which determine the delay value of probing signal, the RS-trigger 19 will be set into a mono-state. The formed probing signal from the output of the RS-trigger 19 arrives at the input of the power amplifier 20 and then at the input of one of the suitable antennas 2.

Within the time period equal to the length of a probing signal being formed a mono-pulse will appear at the output of TDL-2 17, which is connected to the second input of the OR-gate; this mono-pulse will set the RS-trigger 19 into the zero state and complete the operation of forming the probing signal.

The power of probing signals radiated by all transmitting antennas 2 is added in-phase on the surface of an appropriate volume element and these signals form a returned signal (in the case when a heterogeneity is available), which will enter the input of the amplifier 4 through the input of receiving antenna 1.

The tunable gate-pulse unit 7 operates as follows. The calculating microprocessor 10 outputs a «reset» signal for setting the RS-trigger 22 into the zero position and for writing the codes available within the information line passing from the calculating microprocessor 10 to the inputs of DAC-1 24,DAC-2 26, TDL-1 27,TDL-2 28, and counters 29 and 30. Therefore, a code is written into the DAC-1 24 and TDL-1 27, which establishes such a value of delay TDL-1 27, at which the frequency period at the output of TDL-1 27 operating in the mode of self-exciting generation accounts for a whole number of periods (contained within the time delay) of issuing a gate-pulse from the first output of the tunable gate-pulse unit 7 to the control input of the D/A converter 5.

Similarly, the codes to be written into the DAC-2 26 and TDL-2 28 set such a value of delay TDL-2 28, which provides that the frequency period at the output of TDL-2 28 (when it operates in the mode of self-exciting generation) constitutes an integral number of periods contained within the formed time delay of outputting the gate-pulse from the second output of the tunable gate-pulse unit 7 to control inputs of the sample-store unit 6 and A/D converter 8. On command of the «reset» pulse, additional codes shall be written into counters 29 and 30, which help to form the overflow pulses at counters outputs.

When the start-up pulse from the calculating microprocessor 10 arrives at the first input of the mono-pulse generator 21, a mono-pulse shall be formed at the output of this generator, the mono-pulse being fixed to the clock grid of clock-pulse generator 9, the output of which is connected to the second input of the generator 21. The mono-pulse from the output of generator 21 sets the RS-trigger 22 into the mono-state.

The logic unit signal from the output of RS-trigger 22 will transfer the TDL-1 27 and TDL-2 28 into the mode of self-exciting generation. At their outputs, the pulse sequences will appear which enter the inputs of counters 29 and 30, where they will be added with values of additional codes till the moment of overfilling said counters. An overflow pulse from the output of counter 29 through the OR-gate 31 arrives at the control input of the D/A converter 5 and writes a new code thereto, at the DAC output a voltage will result which unlocks the amplifier 4, therefore the returned signal will pass through the amplifier 4 and arrive at the signal input of the sample and store unit 6. After completing the transient processes in the amplifier 4, the returned signal will be written into the analogous memory of the unit 6 through the overflow pulse from the output of counter 30. The same pulse arrives at the control input of the A/D converter 8 and actuates it. A signal from the analogous memory of the unit 6 is transformed into a digital signal and rewritten into the memory of calculating microprocessor 10 in the form of an eight-bit parallel binary code. The ensuing digital code conforms uniquely to the amplitude of returned signal.

The amplitude matrix of returned signals in combination with coordinates of appropriate elements of the volume forms a video image of definite scale at the display 11 screen, which shows the content of a given volume with the help of parameters of volume elements.

The calculating microprocessor 10 is controlled by means of the control panel 12 which allows to turn on and off the device, to change the operation mode, to stop the operation for analysis of the obtained images, to change the scale of images, and to change the coordinates of volume elements which are stored in the memory of the calculating microprocessor 10.

The method of object's radar imaging and the device for realizing the method as described allow to form volumetric images of objects under investigation with a high resolution and to determine the distance to these objects with a high accuracy (up to units of centimeter), including the case when these objects are located in the ground. Additionally, the device provides the forming of volumetric images and measuring of the range to objects in absolute units (meters). The device is implemented on the basis of high technologies and could be realized on standard microcircuits.

The above listed technical characteristics of the device for object radar imaging and great demand for such devices in the whole world stipulate the broad practical applicability of the invention.

## Claims

1. A method for radar imaging of objects by means of a portable radar intended for remote environment investigation, wherein transmitting antennas ($2_1...2_n$) radiate probing signals towards an object which is positioned within a specified three-dimensional volume to be explored and the signals returned from the object are received at a receiving antenna (1), and an image of the object is formed, the method **characterized in that** the transmitting antennas ($2_1...2_n$) successively radiate the probing signals in the direction towards the chosen volume to be explored, said volume being presented as if it were consisting of a plurality of more than two point elements, the time delays of signal propagation $\tau_{3\,TX}$ from each of the transmitting antennas and the time delays of signal propagation $\tau_{3\,RX}$ from the receiving antenna (1) to each of the point elements being previously calculated; the sequence of probing signals radiation by each of the transmitting antennas ($2_1...2_n$) to each of the point elements of the volume being determined on the basis of the a priori calculated time delays of signal propagation, $\tau_{3\,TX}$ and $\tau_{3\,RX}$, so that at least one transmitting antenna having the largest time delay of signal propagation, $\tau_{3\,maxTX}$, to a respective one of the point elements of the volume will be the first to radiate the probing signal; wherein the moment when each subsequent transmitting antenna ($2_1...2_n$) shall be switched on depends on the absolute value of difference in time delay $\Delta\tau_3$ between the maximum time delay $\tau_{3\,maxTX}$ and the time delays of signal propagation $\tau_{3\,TX}$ of remaining transmitting antennas to the same element of the volume; wherein the transmitting antenna for which the $\Delta\tau_3$ value for the same point element of the volume is the largest will be the last to radiate the probing signal; wherein an in-phase power summation of probing signals at the surface of each of the point elements is accomplished at the instant which corresponds to the maximum time delay $\tau_{3\,maxTX}$ of an appropriate transmitting antenna; wherein, provided that a certain structural heterogeneity is available in the respective point elements of the volume, the receiving antenna (1) acquires a signal returned from that heterogeneity in time moments which correspond to the summed-up time delay $\tau_{3\,maxTX}$ of signal propagation for the transmitting antenna and $\tau_{3\,RX}$ for the receiving antenna; and wherein information signals are extracted from the returned signals; the power level of the information signals exceeding a specified signal threshold; whereafter the extracted information signals are digitized and stored as digital signals which correspond to a tone color of an appropriate volume element to be explored, the image of said volume being formed in conformity with the tone color of its elements.

2. A radar imaging device for carrying out the method of claim 1 comprising transmitting antennas ($2_1...2_n$), a receiving antenna (1) and an amplifier (4) connected thereto, an A/D converter, ADC (8), a calculating microprocessor (10) and a display (11) connected successively, as well as a clock generator (9), a control panel (12) for the calculating micro-processor (10), the output of the control panel being connected to a control input of the calculating microprocessor (10), the calculating microprocessor (10) further having a clock input which is connected to the clock generator (9), wherein the transmitting antennas ($2_1...2_n$) are connected to video generators ($3_1...3_n$) with variable delay for determining the moment of turning-on the respective antenna and for regulating the length of pulse signals radiated by the transmitting antennas; a D/Aconverter, DAC (5), a sample-store unit (6) and a tunable gate-pulse unit (7), a first output of this tunable gate-pulse unit (7) connected to the control input of the D/A converter (5) and a second output connected to the control input of the sample-store unit (6) and to the control input of the A/D converter (8), the A/D converter having its input connected to the output of the sample-store unit (6); wherein the input of the sample-store unit (6) is connected to the output of the amplifier (4), said amplifier having a control input connected to the output of the D/A converter (5), the digital inputs of the D/A converter (5) being combined with the digital inputs of the tunable gate-pulse unit (7), and with digital inputs of each of the N video generators ($3_1...3_n$) and, through a digital bus, being connected to digital outputs of the calculating microprocessor (10); wherein a start-up output of the calculating microprocessor (10) is connected to a start-up input of the tunable gate-pulse unit (7) and to a start-up input of each of the video generators ($3_1...3_n$), the clock inputs of the video generators ($3_1...3_n$) being combined and switched on to the clock output of the clock generator (9) and to the clock input of tunable gate-pulse unit (7), a reset input of the tunable gate-pulse unit (7) being combined with a reset input of each of the video generators ($3_1...3_n$), and switched on to the reset output of the calculating microprocessor (10).

3. The radar imaging device of claim 2, **characterized in that** the tunable gate-pulse unit (7) comprises a mono-pulse generator (21), an RS-trigger (22), first and second AND gates (23, 25), first and second D/A converters (24, 26), first and second tunable delay lines (27, 28), first and second counters (29, 30), an OR gate (31), with the digital inputs of the first and the second D/A converters (24, 26), of the first and the second tunable delay lines (27, 28), and of the first and the second counters (29, 30) being combined by a digital bus and representing together a digital input of the tunable gate-pulse unit (7); an R-input of the RS-trigger, (22), reset inputs of the first and the second D/A converters (24, 26), of the first and the second tunable delay lines (27, 28), of the first and the second counters (29, 30), and of the OR gate (31) being combined and representing together a reset input of the device, wherein the other inputs of the device are a start-up input and a clock input of the mono-pulse generator (21), the output thereof being connected to an S-input of the RS-trigger(22), the output thereof being connected correspondingly to inputs of the first and the second AND gates (23, 25), the other inputs of each AND gate (23, 25) being connected to the output of the first tunable delay line (27) and the third input of the first counter (29), which are combined, and to the output of the second tunable delay line (28) and the third input of the second counter (30), which are combined, too; the outputs of the first and the second AND gates (23, 25) being connected to inputs of the first and the second tunable delay lines (27, 28), the other inputs of each delay line being connected to outputs of the first and the second D/A converters (24, 26), and wherein the output of the first counter (29) is connected to the other input of the OR gate (31), the output of which is the first control output of the tunable gate-pulse unit (7), the second control output of the tunable gate-pulse unit (7) being the output of the second counter (30).

4. The radar imaging device of claim 2 or 3, **characterized in that** each video generator (3) with variable delay for determining the moment of switching on the respective transmitting antenna (2) and for fixing the length of pulse signals radiated by the transmitting antenna comprises a mono-pulse generator (13), first and second D/A converters (14, 15), first and second tunable delay lines (16, 17), an OR gate (18), a RS-trigger (19) and a power amplifier (20), wherein the inputs of the first and the second D/A converters (14, 15) and of the first and the second tunable delay lines (16, 17) are combined and represent the digital inputs of the video generator (3), the other inputs of the video generator (3) being a «start-up» input and a clock input of the mono-pulse generator (13), the output thereof being simultaneously connected to logic inputs of the first and the second tunable delay lines (16, 17), the analog inputs of each of the delay lines being connected to outputs of the first and the second D/A converters (14, 15), correspondingly; another one of the inputs of the video generator (3) being a reset input connected to reset inputs of the first and the second D/A converters (14, 15), of the first and the second tunable delay lines (16, 17), and of the OR gate (18); wherein the output of the first tunable delay line (16) is connected to the S-input of the RS-trigger(19), the R-input thereof being connected to the output of the OR gate (18), the other input of the OR gate (18) being connected to the output of the second tunable delay line (17), and wherein the output of the RS-trigger(19) is connected to the input of the power amplifier (20), the output of this power amplifier being an output of the video generator (3).

**Patentansprüche**

1. Verfahren zur Radar-Abbildung von Objekten mittels eines tragbaren Radars, das zur Untersuchung von entfernter Umgebung gedacht ist, wobei Sendeantennen ($2_1 \ldots 2_n$) Sondiersignale zu einem Objekt aussenden, das innerhalb eines spezifizierten dreidimensionalen, zu untersuchenden Volumens positioniert ist, und die vom Objekt zurückgesendeten Signale von einer Empfangsantenne (1) empfangen werden und ein Bild des Objekts gebildet wird, wobei das Verfahren **dadurch gekennzeichnet ist, dass** die Sendeantennen ($2_1 \ldots 2_n$) die Sondiersignale nacheinander in die Richtung des gewählten, zu untersuchenden Volumens abstrahlen, wobei das Volumen so dargestellt wird, als würde es aus einer Mehrzahl von mehr als zwei Punktelementen bestehen, wobei die zeitlichen Verzögerungen der Signalausbreitung $\tau_{3\,TX}$ von jeder Sendeantenne und die zeitlichen Verzögerungen der Signalausbreitung $\tau_{3\,RX}$ von der Empfangsantenne (1) zu jedem Punktelement zuvor berechnet werden; wobei die Abfolge der Sondiersignal-Abstrahlung durch jede Sendeantenne ($2_1 \ldots 2_n$) an jedes Punktelement des Volumens auf Basis der zuvor berechneten zeitlichen Verzögerungen der Signalausbreitung $\tau_{3\,TX}$ und $\tau_{3\,RX}$ bestimmt wird, so dass zumindest eine Sendeantenne mit der größten zeitlichen Verzögerung der Signalausbreitung, $\tau_{3\,maxTX}$, zu einem jeweiligen Punktelement des Volumens das Sondiersignal als erste aussendet; wobei der Zeitpunkt, wann jede darauffolgende Sendeantenne ($2_1 \ldots 2_n$) eingeschaltet werden soll, vom absoluten Wert der Differenz der zeitlichen Verzögerung $\Delta\tau_3$ zwischen der maximalen zeitlichen Verzögerung $\tau_{3\,maxTX}$ und den zeitlichen Verzögerungen der Signalausbreitung $\tau_{3\,TX}$ der restlichen Sendeantennen zum gleichen Element des Volumens abhängt; wobei die Sendeantenne, für welche der $\Delta\tau_3$-Wert für das gleiche Punktelement des Volumens am größten ist, das Sondiersignal zuletzt aussendet; wobei eine gleichphasige Leistungssummierung der Sondiersignale an der Oberfläche jedes Punktelements in dem Moment erreicht wird, der der maximalen Zeitverzögerung $\tau_{3\,maxTX}$ einer passenden Sendeantenne entspricht; wobei die Empfangsantenne (1), vorausgesetzt, dass eine gewisse strukturelle Heterogenität in den jeweiligen Punktelementen des Volumens vorhanden ist, ein Signal aufnimmt, das von dieser Heterogenität zu Zeitpunkten zurückgesendet wird, die der summierten zeitlichen Verzögerung $\tau_{3\,maxTX}$ der Signalausbreitung für die Sendeantenne und $\tau_{3\,RX}$ für die Empfangsantenne entsprechen; und wobei aus den zurückgesendeten Signalen Informationssignale extrahiert werden, deren Leistungspegel einen spezifizierten Signal-Schwellenwert übersteigt; worauf die extrahierten Informationssignale digitalisiert und als digitale Signale gespeichert werden, die einer Tonfarbe eines passenden, zu untersuchenden Volumenelements entsprechen, wobei das Bild des Volumens entsprechend der Tonfarbe seiner Elemente gebildet wird.

2. Radar-Abbildungsvorrichtung zum Durchführen des Verfahrens nach Anspruch 1, mit Sendeantennen ($2_1 \ldots 2_n$), einer Empfangsantenne (1) und einem damit verbundenen Verstärker (4), einem Analog/Digital-Wandler (ADC) (8), einem Berechnungs-Mikroprozessor (10) und einer Anzeige (11), die nacheinander angeschlossen sind, sowie mit einem Taktgeber (9), einem Bedienfeld (12) für den Berechnungs-Mikroprozessor (10), wobei der Ausgang des Bedienfelds mit einem Steuereingang des Berechnungs-Mikroprozessors (10) verbunden ist, wobei der Berechnungs-Mikroprozessor (10) weiters einen Takteingang aufweist, der mit dem Taktgeber (9) verbunden ist, wobei die Sendeantennen ($2_1 \ldots 2_n$) mit Videogeneratoren ($3_1 \ldots 3_n$) mit variabler Verzögerung zum Bestimmen des Zeitpunkts, wann die jeweilige Antenne eingeschaltet wird, und zum Regulieren der Länge der von den Sendeantennen abgestrahlten Impulssignale verbunden ist; mit einem Digital/Analog-Wandler (DAC) (5), einer Proben-Speichereinheit (6) und einer einstellbaren Torimpuls-Einheit (7), wobei ein erster Ausgang dieser einstellbaren Torimpuls-Einheit (7) mit dem Steuereingang des Digital/Analog-Wandlers (5) und ein zweiter Ausgang mit dem Steuereingang der Proben-Speichereinheit (6) und dem Steuereingang des Analog/Digital-Wandlers (8) verbunden ist; wobei der Analog/Digital-Wandler (8) mit seinem Eingang an den Ausgang der Proben-Speichereinheit (6) angeschlossen ist; wobei der Eingang der Proben-Speichereinheit (6) mit dem Ausgang des Verstärkers (4) verbunden ist, der einen Steuereingang aufweist, der mit dem Ausgang des Digital/Analog-Wandlers (5) verbunden ist, wobei die digitalen Eingänge des Digital/Analog-Wandlers (5) mit den digitalen Eingängen der einstellbaren Torimpuls-Einheit (7) und mit digitalen Eingängen jedes der N Videogeneratoren ($3_1 \ldots 3_n$) kombiniert und über einen digitalen Bus mit digitalen Ausgängen des Berechnungs-Mikroprozessors (10) verbunden sind; wobei ein Einschalt-Ausgang des Berechnungs-Mikroprozessors (10) mit einem Einschalt-Eingang der einstellbaren Torimpuls-Einheit (7) und einem Einschalt-Eingang jedes Videogenerators ($3_1 \ldots 3_n$) verbunden ist, wobei die Takteingänge der Videogeneratoren ($3_1 \ldots 3_n$) kombiniert und auf den Taktausgang des Taktgebers (9) und den Takteingang der einstellbaren Torimpuls-Einheit (7) geschaltet sind, wobei ein Rücksetzeingang der einstellbaren Torimpuls-Einheit (7) mit einem Rücksetzeingang jedes Videogenerators ($3_1 \ldots 3_n$) kombiniert und auf den Rücksetzausgang des Berechnungs-Mikroprozessors (10) geschaltet ist.

**3.** RadarAbbildungsvorrichtung nach Anspruch 2, **dadurch gekennzeichnet, dass** die einstellbare Torimpuls-Einheit (7) einen Einpulsgenerator (21), einen RS-Trigger (22), ein erstes und ein zweites Und-Gatter (23,25), einen ersten und einen zweiten Digital/Analog-Wandler (24, 26), eine erste und eine zweite einstellbare Verzögerungsleitung (27, 28), einen ersten und einen zweiten Zähler (29, 30) und ein Oder-Gatter (31) aufweist, wobei die digitalen Eingänge des ersten und zweiten Digital/Analog-Wandlers (24, 26), der ersten und zweiten einstellbaren Verzögerungsleitung (27, 28) und des ersten und zweiten Zählers (29, 30) durch einen digitalen Bus kombiniert sind und gemeinsam einen digitalen Eingang der einstellbaren Torimpuls-Einheit (7) darstellen; wobei ein R-Eingang der RS-Triggers (22), Rücksetzeingänge des ersten und zweiten Digital/Analog-Wandlers (24, 26), der ersten und zweiten einstellbaren Verzögerungsleitung (27, 28), des ersten und zweiten Zählers (29, 30) und des Oder-Gatters (31) kombiniert sind und gemeinsam einen Rücksetzeingang der Vorrichtung darstellen, wobei die anderen Eingänge der Vorrichtung ein Einschalt-Eingang und ein Takteingang des Einpulsgenerators (21) sind, wobei die Ausgänge davon mit einem S-Eingang des RS-Triggers (22) verbunden sind, wobei der Ausgang davon entsprechend mit Eingängen des ersten und zweiten Und-Gatters (23, 25) verbunden sind, wobei die anderen Eingänge jedes Und-Gatters (23, 25) mit dem Ausgang der ersten einstellbaren Verzögerungsleitung (27) und dem dritten Eingang des ersten Zählers (29) verbunden sind, wobei diese kombiniert sind, und mit dem Ausgang der zweiten einstellbaren Verzögerungsleitung (28) und dem dritten Eingang des zweiten Zählers (30) verbunden sind, wobei diese ebenfalls kombiniert sind; wobei die Ausgänge des ersten und zweiten Und-Gatters (23, 25) mit den Eingängen der ersten und zweiten einstellbaren Verzögerungsleitung (27, 28) verbunden sind, wobei die anderen Eingänge jeder Verzögerungsleitung mit den Ausgängen des ersten und zweiten Digital/Analog-Wandlers (24, 26) verbunden sind, und wobei der Ausgang des ersten Zählers (29) mit dem anderen Eingang des Oder-Gatters (31) verbunden ist, dessen Ausgang der erste Steuerausgang der einstellbaren Torimpuls-Einheit (7) ist, wobei der zweite Steuerausgang der einstellbaren Torimpuls-Einheit (7) der Ausgang des zweiten Zählers (30) ist.

**4.** Radar-Abbildungsvorrichtung nach Anspruch 2 oder 3, **dadurch gekennzeichnet, dass** jeder Videogenerator (3) mit variabler Verzögerung zum Bestimmen des Zeitpunkts, wann die jeweilige Sendeantenne (2) eingeschaltet wird, und zum Festlegen der Länge der von der Sendeantenne abgestrahlten Impulssignale einen Einpulsgenerator (13), einen ersten und einen zweiten Digital/AnalogWandler (14, 15), eine erste und eine zweite Verzögerungsleitung (16, 17), ein Oder-Gatter (18), einen RS-Trigger (19) und einen Leistungsverstärker (20) enthält, wobei die Eingänge des ersten und zweiten Digital/Analog-Wandlers (14, 15) und der ersten und zweiten einstellbaren Verzögerungsleitung (16, 17) kombiniert sind und die digitalen Eingänge des Videogenerators (3) darstellen, wobei die anderen Eingänge des Videogenerators (3) ein Einschalt-Eingang und ein Takteingang des Einpulsgenerators (13) sind, dessen Ausgang gleichzeitig mit Logik-Eingängen der ersten und zweiten einstellbaren Verzögerungsleitung (16, 17) verbunden ist, wobei die analogen Eingänge jeder Verzögerungsleitung entsprechend mit Ausgängen des ersten und zweiten Digital/Analog-Wandlers (14, 15) verbunden sind; wobei ein weiterer Eingang des Videogenerators (3) ein Rücksetzeingang ist, der mit den Rücksetzeingängen des ersten und zweiten Digital/Analog-Wandlers (14, 15), der ersten und zweiten einstellbaren Verzögerungsleitung (16, 17) und des Oder-Gatters (18) verbunden ist; wobei der Ausgang der ersten einstellbaren Verzögerungsleitung (16) mit dem S-Eingang des RS-Triggers (19) verbunden ist, dessen R-Eingang mit dem Ausgang des Oder-Gatters (18) verbunden ist, wobei der andere Eingang des Oder-Gatters (18) mit dem Ausgang der zweiten einstellbaren Verzögerungsleitung (17) verbunden ist, und wobei der Ausgang des RS-Triggers (19) mit dem Eingang des Leistungsverstärkers (20) verbunden ist, dessen Ausgang ein Ausgang des Videogenerators (3) ist.

## Revendications

**1.** Procédé de cartographie radar d'objets au moyen d'un radar portatif prévu pour une investigation d'environnement à distance, dans lequel des antennes émettrices ($2_1$... $2_n$) font rayonner des signaux de mesure en direction d'un objet qui est positionné à l'intérieur d'un volume tridimensionnel spécifié à explorer, et les signaux renvoyés à partir de l'objet sont reçus au niveau d'une antenne réceptrice (1), et une image de l'objet est formée, le procédé étant **caractérisé en ce que** les antennes émettrices ($2_1$... $2_n$) font rayonner successivement les signaux de mesure dans la direction du volume choisi à explorer, ledit volume étant présenté comme s'il était constitué d'une pluralité de plus de deux éléments de point, les retards de propagation de signaux $\tau_{3\,TX}$ de chacune des antennes émettrices et les retards de propagation de signaux $\tau_{3\,RX}$ de l'antenne réceptrice (1) à chacun des éléments de point étant calculés au préalable ; la séquence de rayonnement de signaux de mesure par chacune des antennes émettrices ($2_1$... $2_n$) vers chacun des éléments de point du volume étant déterminée sur la base des retards calculés a priori de propagation de signaux, $\tau_{3\,TX}$ et

$\tau_{3\,RX}$, de sorte qu'au moins une antenne émettrice présentant le retard le plus important de propagation de signaux, $\tau_{3max\,TX}$, vers l'un respectif des éléments de point du volume sera la première à faire rayonner le signal de mesure ; dans lequel l'instant auquel chaque antenne émettrice suivante ($2_1... 2_n$) devra être activée dépend de la valeur absolue de différence de retard $\Delta\tau_3$ entre le retard maximal $\tau_{3\,maxTX}$ et les retards de propagation de signaux $\tau_{3\,TX}$ d'antennes émettrices restantes vers ce même élément du volume ; dans lequel l'antenne émettrice pour laquelle la valeur $\Delta\tau_3$ pour ce même élément de point du volume est la plus grande sera la dernière à faire rayonner le signal de mesure ; dans lequel un calcul de somme de puissance en phase de signaux de mesure au niveau de la surface de chacun des éléments de point est effectué à l'instant qui correspond au retard maximal $\tau_{3\,maxTX}$ d'une antenne émettrice appropriée ; dans lequel, du moment qu'une certaine hétérogénéité structurelle est disponible dans les éléments de point respectifs du volume, l'antenne réceptrice (1) fait l'acquisition d'un signal renvoyé à partir de cette hétérogénéité à des instants qui correspondent aux retards $\tau_{3\,maxTX}$ de propagation de signaux de l'antenne émettrice et $\tau_{3\,RX}$ de l'antenne réceptrice sommés ; et dans lequel des signaux d'information sont extraits des signaux renvoyés, le niveau de puissance des signaux d'information dépassant un seuil de signal spécifié ; après quoi les signaux d'information extraits sont numérisés et mémorisés en tant que signaux numériques qui correspondent à un timbre d'un élément de volume approprié à explorer, l'image dudit volume étant formée conformément au timbre de ses éléments.

2. Dispositif de cartographie radar pour exécuter le procédé selon la revendication 1, comprenant des antennes émettrices ($2_1... 2_n$), une antenne réceptrice (1) et un amplificateur (4) connecté à celle-ci, un convertisseur analogique/numérique (*A/D, pour Analog/Digital*) ADC, (8), un microprocesseur de calcul (10) et un afficheur (11) connectés successivement, de même qu'un générateur de signal d'horloge (9), une console de commande (12) destinée au microprocesseur de calcul (10), la sortie de la console de commande étant connectée à une entrée de commande du microprocesseur de calcul (10), le microprocesseur de calcul (10) comportant en outre une entrée de signal d'horloge qui est connectée au générateur de signal d'horloge (9), dans lequel les antennes émettrices ($2_1... 2_n$) sont connectées à des générateurs vidéo ($3_1... 3_n$) avec un retard variable de détermination de l'instant d'activation de l'antenne respective et de régulation de la longueur de signaux impulsionnels rayonnés par les antennes émettrices ; un convertisseur numérique/analogique (*D/A, pour Digital/Analog)*, DAC (5), une unité d'échantillonnage- de mémorisation (6) et une unité d'impulsions logique accordable (7), une première sortie de cette unité d'impulsions logique accordable (7) étant connectée à l'entrée de commande du convertisseur numérique/analogique (5) et une seconde sortie étant connectée à l'unité de commande de l'unité d'échantillonnage - de mémorisation (6) et à l'entrée de commande du convertisseur analogique/numérique (8), l'entrée du convertisseur analogique/numérique étant connectée à la sortie de l'unité d'échantillonnage - de mémorisation (6) ; dans lequel l'entrée de l'unité d'échantillonnage - de mémorisation (6) est connectée à la sortie de l'amplificateur (4), une entrée de commande dudit amplificateur étant connectée à la sortie du convertisseur numérique/analogique (5), les entrées numériques du convertisseur numérique/analogique (5) étant combinées avec les entrées numériques de l'unité d'impulsions logique accordable (7), et avec des entrées numériques de chacun des N générateurs vidéo ($3_1... 3_n$) et, par l'intermédiaire d'un bus numérique, étant connectées à des sorties numériques du microprocesseur de calcul (10) ; dans lequel une sortie de démarrage du microprocesseur de calcul (10) est connectée à une entrée de démarrage de l'unité d'impulsions logique accordable (7) et à une entrée de démarrage de chacun des générateurs vidéo ($3_1... 3_n$), les entrées de signal d'horloge des générateurs vidéo ($3_1... 3_n$) étant combinées et débloquées par rapport à la sortie de signal d'horloge du générateur de signal d'horloge (9) et à l'entrée de signal d'horloge de l'unité d'impulsions logique accordable (7), une entrée de restauration de l'unité d'impulsions logique accordable (7) étant combinée avec une entrée de restauration de chacun des générateurs vidéo ($3_1... 3_n$), et débloquée par rapport à la sortie de restauration du microprocesseur de calcul (10).

3. Dispositif de cartographie radar selon la revendication 2, **caractérisé en ce que** l'unité d'impulsions logique accordable (7) comprend un générateur mono-impulsion (21), un déclencheur RS (22), des première et seconde portes ET (23, 25), des premier et second convertisseurs numérique/analogique (24, 26), des première et seconde lignes à retard accordables (27, 28), des premier et second compteurs (29, 30), une porte OU (31), les entrées numériques des premier et second convertisseurs numérique/analogique (24, 26), des première et seconde lignes à retard accordables (27, 28) et des premier et second compteurs (29, 30) étant combinées par un bus numérique et représentant conjointement une entrée numérique de l'unité d'impulsions logique accordable (7) ; une entrée R du déclencheur RS (22), des entrées de restauration des premier et second convertisseurs numérique/analogique (24, 26), des première et seconde lignes à retard accordables (27, 28), des premier et second compteurs (29, 30) et de la porte OU (31) étant combinées et représentant conjointement une entrée de restauration du dispositif, dans lequel les autres entrées du dispositif sont une entrée de démarrage et une entrée de signal d'horloge du générateur mono-impulsion (21), sa sortie étant connectée à une entrée S du déclencheur RS (22), sa sortie étant connectée de manière correspondante à des entrées des première et seconde portes ET (23, 25), les autres entrées de chaque porte ET (23, 25) étant connectées à la sortie de la première ligne à retard accordable (27) et à la troisième entrée du premier compteur (29), qui sont combinées, et à la sortie de la seconde ligne à retard accordable (28) et à la troisième entrée du second compteur (30), qui sont combinées également ; les sorties des première et seconde portes ET (23, 25) étant connectées à des entrées des première et seconde lignes à retard accordables (27, 28), les autres entrées de chaque ligne à retard étant connectées à des sorties des premier et second convertisseurs numérique/analogique (24, 26), et dans lequel la sortie du premier compteur (29) est connectée à l'autre entrée de la porte OU (31), dont la sortie est la première sortie de commande de l'unité d'impulsions logique accordable, la seconde sortie de commande de l'unité d'impulsions logique accordable (7) étant la sortie du second compteur (30).

4. Dispositif de cartographie radar selon la revendication 2 ou 3, **caractérisé en ce que** chaque générateur vidéo (3) à retard variable de détermination de l'instant d'activation de l'antenne émettrice respective (2) et de fixation de la longueur de signaux impulsionnels rayonnés par l'antenne émettrice comprend un générateur mono-impulsion (13), des premier et second convertisseurs numérique/analogique (14, 15), des première et seconde lignes à retard accordables (16, 17), une porte OU (18), un déclencheur RS (19) et un amplificateur de puissance (20), dans lequel les entrées des premier et second convertisseurs numérique/analogique (14, 15) et des première et seconde lignes à retard accordables (16, 17) sont combinées et représentent les entrées numériques du générateur vidéo (3), les autres entrées du générateur vidéo (3) étant une entrée de démarrage et une entrée de signal d'horloge du générateur mono-impulsion (13), sa sortie étant connectée simultanément à des entrées logiques des première et seconde lignes à retard accordables (16, 17), les entrées analogiques de chacune des lignes à retard étant connectées, de manière correspondante, à des sorties des premier et second convertisseurs numérique/analogique (14, 15) ; une autre des entrées du générateur vidéo (3) étant une entrée de restauration connectée à des entrées de restauration des premier et second convertisseurs numérique/analogique (14, 15), des première et seconde lignes à retard accordables (16, 17) et de la porte OU (18) ; dans lequel la sortie de la première ligne à retard accordable (16) est connectée à l'entrée S du déclencheur RS (19), son entrée R étant connectée à la sortie de la porte OU (18), l'autre entrée de la porte OU (18) étant connectée à la sortie de la seconde ligne à retard accordable (17), et dans lequel la sortie du déclencheur RS (19) est connectée à l'entrée de l'amplificateur de puissance (20), la sortie de cet amplificateur de puissance étant une sortie du générateur vidéo (3).

Fig. 1

**Fig. 2**

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1751708 A
- JP 61260176 A
- EP 0816872 A1
- DE 4007611 C1

- FR 2558964 A
- US 5093665 A
- FR 2566922 A

**Non-patent literature cited in the description**

- *Zarubeshnaya Radioelektronika,* 1991, 108
- *Zarubeshnaya Radioelektronika,* 1984, 15
- **Osumi N. ; Ueno K.** *Proc. Int. Symp*
- **Noise ; Clutter.** *Rej.in Radar and Imag. Sens.,* 1984

- **Sakamoto Y.** *IEEE Trans,* 1988, vol. GE26 (4
- **Osumi N. ; Ueno K.** *Proc. Int. Symp,* 1984
- **Noise ; Clutter.** *Rej, in Radar and Imag. Sens.,* 1984